(19) Europäisches Patentamt
European Patent Office
Office européen des brevets

(11) **EP 3 670 459 B1**

(12) **EUROPEAN PATENT SPECIFICATION**

(45) Date of publication and mention
of the grant of the patent:
**21.05.2025 Bulletin 2025/21**

(21) Application number: **20150082.4**

(22) Date of filing: **20.12.2016**

(51) International Patent Classification (IPC):
*C03C 3/083* (2006.01)    *C03C 3/085* (2006.01)
*C03C 11/00* (2006.01)    *C04B 14/24* (2006.01)
*C04B 26/02* (2006.01)    *C04B 28/00* (2006.01)
*C04B 28/02* (2006.01)    *C04B 28/14* (2006.01)
*C09K 8/473* (2006.01)

(52) Cooperative Patent Classification (CPC):
**C03C 11/002; B22D 25/005; C03C 3/083;
C03C 3/085;** Y02P 40/10

(54) **CHEMICAL COMPOSITION FOR PRODUCTION OF HOLLOW SPHERICAL GLASS PARTICLES WITH HIGH COMPRESSIVE STRENGTH**

CHEMISCHE ZUSAMMENSETZUNG ZUR HERSTELLUNG VON HOHLEN KUGELFÖRMIGEN GLASTEILCHEN MIT HOHER DRUCKFESTIGKEIT

COMPOSITION CHIMIQUE POUR LA PRODUCTION DE PARTICULES SPHÉRIQUES EN VERRE CREUX PRÉSENTANT UNE RÉSISTANCE ÉLEVÉE À LA COMPRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2015 EP 15201520**

(43) Date of publication of application:
**24.06.2020 Bulletin 2020/26**

(62) Document number(s) of the earlier application(s) in accordance with Art. 76 EPC:
**16826026.3 / 3 393 988**

(73) Proprietor: **Omya International AG
4665 Oftringen (CH)**

(72) Inventor: **Isaev, Alexander
1190 Wien (AT)**

(74) Representative: **Maiwald GmbH
Elisenhof
Elisenstraße 3
80335 München (DE)**

(56) References cited:
**EP-A1- 1 156 021      US-A1- 2004 081 827
US-A1- 2010 160 527**

**Description**

The invention concerns a hollow spherical glass particle.

Moreover, the invention concerns a plurality of hollow spherical glass particles.

Furthermore, the invention concerns a filler comprising a plurality of hollow spherical glass particles.

Furthermore, the invention concerns a use of the above-mentioned filler in metal matrix syntactic foams.

Moreover, the invention concerns a metal matrix syntactic foam comprising the above-mentioned filler.

Furthermore, the invention concerns a method for producing hollow spherical glass particles.

The invention also concerns a formulation comprising an inorganic binder and the above-mentioned filler.

Furthermore, the invention concerns a formulation comprising an organic binder and the above-mentioned filler.

Another aspect of the invention is a use of the above-mentioned filler in acoustic applications, heat insulation applications, self-levelling masses, repair mortars, lightweight concrete, freeze-thaw resistant concrete, insulating coatings and/or sound and vibration dampers.

Furthermore, the invention concerns a use of the above-mentioned filler in the development, exploitation and/or completion of underground mineral oil and natural gas deposits and in deep drillings.

Moreover the invention concerns a use of the above-mentioned formulation in the development, exploitation and/or completion of underground mineral oil and natural gas deposits and in deep drillings.

Hollow spherical glass particles, also known in the state of the art as "synthetic glass microspheres" or "glass microbubbles" or "glass microballoons", typically have low specific gravity, satisfactory heat resistance, heat insulating properties, pressure-resistance (e.g., crush strength) and impact resistance, and may achieve superior physical properties in comparison to conventional fillers. Each hollow spherical glass particle has an essentially spherical form and an essentially spherical inner void.

Due to their advantageous properties the hollow spherical glass microspheres are used in a variety of areas and applications. For example, the hollow spherical glass microspheres are used as light-weight fillers for composite polymeric materials of different kinds or in cryogenic technology, for fabrication of acoustic and thermal insulating materials or as targets for laser thermonuclear synthesis. An overview of the state of the art regarding the use, properties and technology of the hollow spherical glass particles can be found for example in "Hollow glass microspheres. Use, properties, and technology (Review)" by V.V. Budov in Science In Glass Production, Glass and Ceramics, July 1994, Volume 51, Issue 7, pp 230-235.

Several methods for producing hollow spherical glass particles have also been developed and are described in the prior art. Early methods for manufacturing hollow glass microspheres involved for example combining sodium silicate and boric acid with a suitable foaming agent, drying (for example in a spray dryer) or crushing the mixture with addition ingredients (for example in a ball mill with a suspension of water, china clay, feldspars, metakaolin, sodium silicate and/or potassium silicate, zeolites, sodium carbonate and/or potassium carbonate and/or calcium carbonate and/or magnesium carbonate, aluminium hydroxide etc.), adjusting the size of the crushed particles and drying the mixture in a spray dryer in order to achieve granules. Subsequently the granules are fired. The firing temperature achieves values of between about 1200°C and 1800°C. However, these methods have a drawback that starting materials such as boric acid are required that can result in the formation of toxic compounds during production of and/or while using the hollow spherical glass particles.

U.S. Patent number 7,666,505 B2 describes hollow spherical glass particles comprising aluminosilicate and methods of making same. The hollow spherical glass microspheres described therein comprise 5,2 wt.% to 30 wt.% calcium oxide and greater than 4 wt.% to less than about 10 wt.% sodium oxide, wherein the microspheres have a total alkali metal oxide content of less than about 10 wt.%. In addition, U.S. Patent number 7,666,505 B2 describes that the presence of relatively high percentage of sodium oxide results in a poor chemical durability of the hollow spherical glass particles.

U.S. Patent application number 09/858,571 (Pub. No: US 2001/0043996 A1) and U.S. Patent application number 14/440,249 (Pub. No: US 2015/0315075 A1) describe hollow glass aluminosilicate microspheres and processes for their production. The mechanical durability of these microspheres is higher due to boron trioxide ($B_2O_3$). However, as described above, the presence of boron that may lead to toxic boron compounds is undesirable. Moreover, the presence of boron trioxide lowers the melting temperature of the microspheres.

The objective of the present invention is to provide a boron-free chemical composition for production of hollow spherical glass particles and materials comprising such particles with high mechanical durability and high melting temperature.

According to the invention, this objective is achieved by providing hollow spherical glass particles according to claim 1.

Advantageously, the hollow spherical glass particle comprises sodium oxide. It is generally understood from the state of the art that adding sodium oxide reduces the chemical stability of the hollow spherical glass particle. However, according to the present invention, the presence of sodium oxide and in generally alkali metal oxides, such as potassium oxide, in a right proportion can surprisingly increase the mechanical robustness (80% crush strength) of the hollow spherical glass particle. In the state of the art, the mechanical stability (80% crush strength) of the hollow spherical glass particle is usually provided by adding some boron compounds. According to the present invention, however, no addition of such, potentially toxic, compounds is needed.

In one preferred embodiment of the invention, the hollow spherical glass particle comprises between about 32 wt. % and about 40 wt. %, preferably about 36 wt. %, of $Al_2O_3$, between about 38 wt. % and about 46 wt. %, preferably about 42 wt. %, of $SiO_2$ and between about 18 wt. % and about 26 wt. %, preferably about 22 wt. %, of at least one alkali metal oxide.

In another preferred embodiment of the invention, the hollow spherical glass particle comprises between about preferably 18 wt. % and about 26 wt. %, preferably about 22 wt. %, of a mixture of $K_2O$ and $Na_2O$. The wt.% ratio between the potassium and sodium oxides can be chosen arbitrary. Instead of or in addition to the potassium oxide a lithium oxide $Li_2O$ can be chosen as well. Without being wished to be bound to a certain theory, it is understood that due to mixing of at least two alkali metal oxides (for example of $K_2O$ and $Na_2O$) a so-called mixed-alkali effect is achieved, which for example makes the hollow spherical glass particles chemically more stable.

Furthermore it can be provided that the hollow spherical glass particle has a particle diameter of between about 100 and about 400 microns.

As it will be demonstrated by the examples provided below, differently sized particles can have different 80% crush strength. Generally and especially within the scope of the present invention it is understood that "80% crush strength" refers to a pressure at which essentially about 20% of particles are destroyed, i.e. loose their essentially spherical form.

In one preferred embodiment it can be provided that the hollow spherical glass particle has an 80% crush strength of at least 10000 psi, more preferably at least 12500 psi, especially at least 15000 psi. The particles in this invention were subjected to an isostatic compressive strength test in a crush strength measuring apparatus (POREMASTER 60 GT by Quantachrome Istruments). It is important to note that no hardening (chemical hardening, temperature hardening or other type of hardening) of the hollow spherical glass particles according to the invention was performed prior to the above mentioned isostatic compressive test. Typically, a silane coating is added to the conventional hollow spherical glass particles prior to the isostatic compressive strength test, in order to increase their 80% crush strength. No such hardening was performed with the hollow spherical glass particles according to the invention.

Moreover, in other embodiments, the hollow spherical glass particle has melting temperature of at least 1200°C.

According to the invention, the object is also achieved by means of a plurality of hollow spherical glass particles as described herein. In preferred embodiments, the plurality of the hollow spherical glass particles have a true density, i.e. the density of the particles that make up a powder or particulate solid, of between about 0.4 $g/cm^3$ and about 0.8 $g/cm^3$, more preferably of between about 0.45 $g/cm^3$ and about 0.75 $g/cm^3$, more preferably a true density of between about 0.5 $g/cm^3$ and about 0.6 $g/cm^3$.

According to the invention the object is also achieved by means of a metal matrix syntactic foam comprising a filler, wherein the filler comprises a plurality of the hollow spherical glass particles according to the invention, wherein the metal in the metal matrix syntactic foam is aluminum alloy or aluminum.

Metal matrix syntactic foams, also known as "syntactic metal materials" (see e.g. U.S. Pat. Number US 9,096,034 B2) or "metal syntactic foams" (see e.g. U.S. Pat. Number US 8,815,408 B1), are known to the person skilled in the art mostly due to their exceptionally high strength.

There are different materials known in the art that can be used as fillers in such foams. U.S. Pat. Number US 9,096,034 B2 describes ceramic microballoons as a filler. In U.S. Pat. Number US 8,815,408 B1 hollow metallic shells are used for filling purposes.

Thus, according to the present invention an aluminum metal matrix syntactic foam is provided by mixing melted aluminum or aluminium alloy having its melting temperature of between about 600°C and about 700°C, and a plurality of hollow spherical glass particles according to the invention and described herein. In contrast to the hollow spherical glass particles according to the invention, conventional hollow spherical glass particles have either a relatively high crush strength and a low melting temperature or relatively low crush strength and a high melting temperature.

Furthermore, the invention concerns a method for producing hollow spherical glass particles according to claim 9.

A uniform feeding of the dried mixture can be achieved by feeding the particles (of the dried mixture) into the heating device at some constant rate. It is to be understood that this rate can vary depending for example on the geometry and size of the heating device. Various heating devices can be used for this purpose. For example the heating device can be designed as a conventional tube furnace and a graphite tube as a heating element, wherein argon can be used as a protective gas for providing a protected atmosphere in the furnace. One can also use other heating devices that for example comprise a heating element made of molybdenum alloy or silicon molybdenum alloy or heating devices with induction heating.

The term "enough flowability" as used herein means that the flowability of the mixture is adjusted in order to allow spray drying of the mixture. The skilled person is able to choose an suitable flowability of the mixture based on her/his common knowledge and/or through routine experimentation.

In one preferred embodiment of the method the hollow spherical glass particles can be collected at about 50 cm below the furnace.

In a preferred embodiment of the method according to the present invention comprises a step of milling the mixture, for example in a ball mill, in order to achieve a milled powder, such that an average size of particles in the milled powder is of at most about 5 microns, wherein the milling of the mixture is performed after Step 2 and before Step 3.

Another aspect of the invention is a formulation comprising an inorganic binder and a light aggregate in form of a filler, which filler comprises a plurality of hollow spherical glass particles according to the present invention. Such formulations can be used for instance in the development, exploitation and/or completion of underground mineral oil and natural gas deposits and in deep drillings. Preferably such formulations can be used in borehole cementing and/or drilling muds. For example cementing of oil and gas wells can serve the following purposes:

- achieving pipe-to-rock bond;
- protecting the pipe and productive formations;
- sealing problematic formations prior to further drilling;
- protecting high-pressure zones from blowouts;
- providing support for the casing;
- protecting pipes from corrosion;
- sealing to protect from pressure surges during further drilling.

Some of the known cementing techniques are:

1. Single-stage casing cementing which is called normal displacement technique;
2. Multi-stage cementing used for wells with a critical fracture gradient or if thorough cementing of the last casing string is required;
3. inner-string cementing through a drill pipe (for large-diameter strings);
4. multiple-string cementing (for small-diameter tubing);
5. reverse-circulation cementing for critical formations;
6. delayed-set cementing for critical formations and to improve placement;
7. outside or annulus cementing through tubing for conductor or other large-diameter tubing.

Among the above listed methods the methods that are most frequently used are the single-stage and the multi-stage cementing. Comparing to the multi-stage cementing the single-stage cementing is easier to perform: it requires less equipment, materials and labor. The advantages of the single-stage cementing include for example a shorter cementing time due to a lack of the second stage and less waiting-on-cement time. The simplicity of the technique leads to lower risks of equipment failure and mistakes by personnel. This makes single-stage cementing a more attractive alternative.

However, the strength of the state-of-the-art formulations represents a problem. Wells are usually cemented with the use cement slurry. Portland cement containing various types of microspheres including artificial glass, ceramic or polymer, fly ash products, so called ash aluminosilicate microspheres (cenospheres) as light aggregate is widely used as the basic plugging material to prepare lightweight cement slurry. The main disadvantage of lightweight systems based on Portland cement containing microspheres for single-stage casing cementing is a limited depth at which this type of the cement slurry can be used. This is primarily linked to insufficient shell strength of ash aluminosilicate microspheres - the most frequently used main lightweight component of cement slurries. According to experiments performed at Tyumen-NIIgiprogas LLC (see reference below) and the plugging department of the Tyumenburgaz branch an excess water suspension pressure from 20 to 40 MPa (the pressure at the depth of 1,500 to 3,000 m where the vast majority of oil and gas deposits are located) leads to destruction and sedimentation of 30 to 50% of the industry standard spheres (e.g. cenospheres). Some microspheres collapse with breakdown of the particles into separate fragments while a majority of the microspheres develop microcracks on the surface. This means that at high pressures these microspheres are not destroyed but their cavities are filled with grouting fluid through microcracks leading to particle sedimentation. The slurry increases its density and creates a risk of premature thickening of cement slurry, loss of circulation and nonlifting of the lightweight slurry to the well mouth (see e.g. R.R. Lukmanov et al. Method of Predicting Changes in Properties and Prevention of Complications during Well Cementing Using Cement Slurries with Microspheres. Scientific-Technical Journal "Construction of Oil and Gas Wells On Land and Offshore". 2005 N8 pp. 38-42). A formulation comprising hollow spherical glass particles according to the present invention is stronger than the known state-of-the-art formulations and can be used in the lower depths.

In one preferred embodiment of the formulation according to the present invention comprises from 5 to 150 wt.-%, preferably 10 to 80 wt. %, of the filler according to the present invention, based on the dry weight of the inorganic binder.

Advantageously the inorganic binder is selected from cement, gypsum and/or a geopolymer binder.

In a preferred embodiment the formulation is in the form of an aqueous dispersion or a water-based or dry foam.

One preferred embodiment of the present invention concerns the use of the formulation according to the present invention and/or the filler according to the present invention in borehole cementing and/or drilling muds.

The invention is further explained by the following non-limiting examples describing a method for producing hollow spherical glass particles according to the invention and a formulation comprising an inorganic binder and the filler according to the present invention that can be used in the development, exploitation and/or completion of underground mineral oil and natural gas deposits and in deep drillings and preferably in borehole cementing and/or drilling muds.

Fig. 1 shows a microscopic image of the hollow spherical glass particles according to a preferred embodiment of the present invention.

Fig. 2 shows a mercury porosity test performed on hollow spherical glass particles according to a preferred embodiment of the present invention.

Fig. 3 shows compressive strength tests of cement slurries.

Fig. 4 shows rheology of cement slurries.

Example 1: producing the hollow spherical glass particles

Three samples were prepared by mixing ingredients containing aluminium oxide $Al_2O_3$, sodium oxide $Na_2O$, silicon dioxide $SiO_2$ and potassium oxide $K_2O$ (for example the resulting mixture can comprise china clay, feldspar, potassium carbonate, zeolites, aluminium hydroxide, potassium or sodium silicate, porcelain) in order to achieve an atomic ratio of aluminum, silicon and either sodium or potassium or both sodium and potassium atoms of about 1:1:1, i.e. $A_{Al:Si:(Na + K)}$=1:1:1. This means that for each Al atom there is essentially one Si atom and essentially one Na or K atom in the mixture. For two Al atoms there are essentially two Si atoms and either essentially one Na atom and essentially one K atom or essentially two Na atoms or essentially two K atoms. In particular, in this example the mixture comprised about 36 wt. % of $Al_2O_3$, about 42 wt. % of $SiO_2$, about 21 wt. % of $Na_2O$ and about 1% of $K_2O$. Depending on the purity of these ingredients there might be may be impurities, i.e. other chemical compounds, present. However, the total amount of impurities (other chemical compounds) should not exceed 3-4 wt. %.

After mixing the ingredients above, the mixture can be milled in a ball mill, in order to achieve an average size of particles of at most about 5 microns. The milling can be dry or wet and can be omitted if the particle size does not have to be adjusted. Thereafter the mixture was further mixed with water and blended, in order to achieve enough flowability for subsequent spray drying. After drying in a spray dryer at the temperature of about 150-250°C, a powder with granules (particles) having an with average size of about 80-400 microns was achieved. The granules was then separated according to their size into three fractions: Fraction 1: about 80-140 microns; Fraction 2: about 140-200 microns; and Fraction 3: about 200-400 microns; all fractions having a moisture content of at least about 1% and at most 10%. After the separation step, each fraction was fed into a tube furnace with induction heating at a rate of about 1 grams/min. A graphite tube was used as a heating element and argon was used as a protective gas for providing a protected atmosphere in the furnace. The temperature in the furnace was between about 1500° and about 1800° C. Residence time of the particles in the furnace was at least 1 sec. After processing the respective granules fractions 1, 2 and 3 in the tube furnace, the resulting hollow spherical glass particles were collected 50 cm below the furnace.

As a result, three types of the hollow spherical glass particles were obtained. Their properties are summarized below.

Type 1 (resulting from Fraction 1): The hollow spherical glass particles of the first type have an essentially white color and exhibit a bulk density of about 0.43 g/cm$^3$, a true density of about 0.75 g/cm$^3$, a particle diameter of between about 100 micron and about 150 micron, a melting temperature of about 1200°C and an 80% crush strength of about 15000 psi (100Mpa).

Type 2 (resulting from Fraction 2): The hollow spherical glass particles of the second type have an essentially white color and exhibit a bulk density of about 0.38 g/cm$^3$, a true density of about 0.6 g/cm$^3$, a particle diameter of between about 150 micron and about 200 micron, a melting temperature of about 1200°C and an 80% crush strength of about 12500 psi (85Mpa).

Type 3 (resulting from Fraction 3): The hollow spherical glass particles of the third type have an essentially white color and exhibit a bulk density of about 0.32 g/cm$^3$, a true density of about 0.5 g/cm$^3$, a particle diameter of between about 200 micron and about 400 micron, a melting temperature of about 1200°C and an 80% crush strength of about 10000 psi (70Mpa).

Generally and especially within the scope of the present invention it is understood that the bulk density is not an intrinsic property of the hollow spherical glass particles and can essentially slightly change depending on how the particles are handled. Within the scope of this invention the hollow spherical glass particles have a bulk density of between about 0.3

g/cm$^3$ and about 0.45 g/cm$^3$.

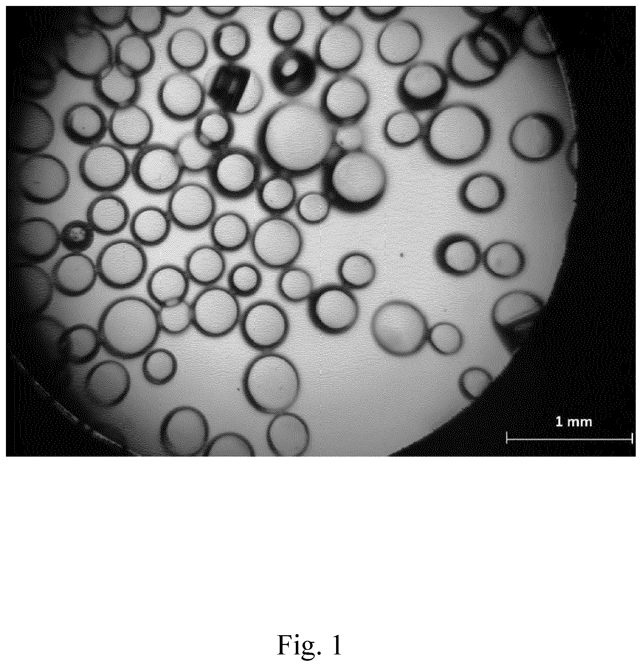

Fig. 1 shows a microscopic image of the hollow spherical glass particles of the above example, in which the granules were not separated according to their size. Therefore, all three types (Type 1, Type 2 and Type 3) of the hollow spherical glass particles are depicted in Fig. 1. The minimal size (diameter) of the hollow spherical glass particles in Fig. 1 is about 100 microns, the maximal size (diameter) is about 400 microns.

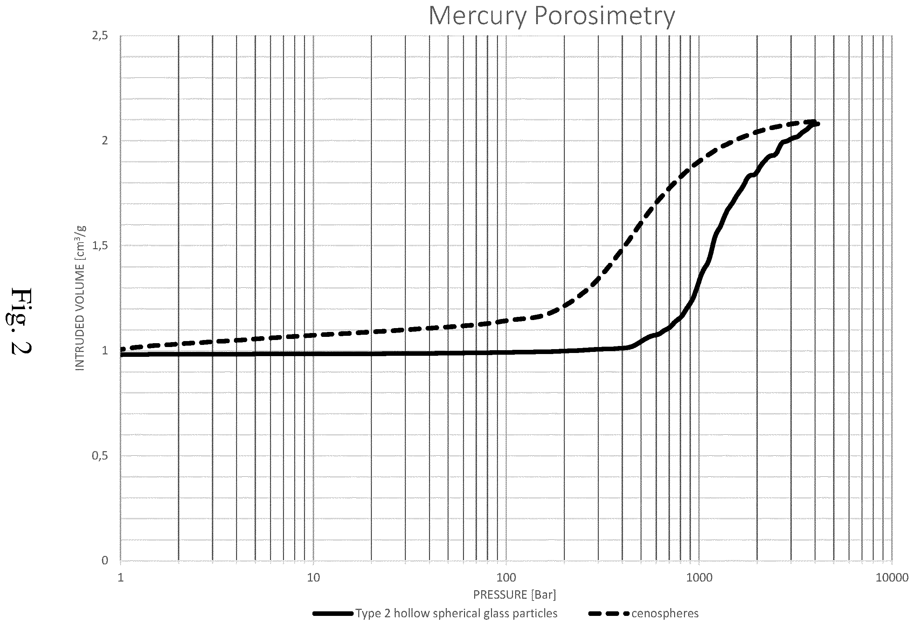

Fig. 2 shows a mercury porosity test performed on Type 2 hollow spherical glass particles with an average diameter of about 150 microns (solid line) and on cenospheres produced by ENVIROSPHERES PTY LTD (E-Spheres) with about the same average diameter (dashed line). The test was performed using Quantachrome isostatic press described above at the Quantachrome laboratory, Munich, Germany. Fig. 2 shows that a pressure of 200-400 bar (20-40 MPa) causes virtually no destruction of Type 2 hollow spherical glass particles, but leads to destruction of 50% of the cenosphere volume, which makes Type 2 hollow spherical glass particles a better material for example for use as a light aggregate in a binding agent in the single-stage well cementing.

Example 2: compressive strength tests of cement slurries containing hollow spheres

In order to formulate a cement slurry with a density of less than 15 pound per gallon (ppg) a filler, for example in form of hollow spheres, can be used to reduce slurry weight. In this example two different types of the hollow spheres were used as a filler: Type 2 hollow spherical glass particles according to the present invention and industry standard spheres (S 60, borosilicate glass, 3M). The dosage of the Type 2 hollow spherical glass particles according to the present invention with a specific gravity of 0,6 g/mL can range from 20% by weight of the cement (bwoc) up to 150% by weight of cement. A typical dosage of the hollow spheres (e.g. industry standard spheres or (any type of the) hollow spherical glass particles according to the present invention) would be in the range of 20 - 80% by weight of cement.

In order to create a cement slurry with 11 ppg density 700 g of API Class G cement is mixed with 700 g of water and 2 g (= 2% bwoc) of bentonite with a Warring Blender Type according to API Recommended Practice 10B at high speed. The bentonite increases the viscosity of the cement slurry and thus, prevents separation of the cement slurry. After mixing 350 g of hollow spheres (= 50%bwoc) - in this example industry standard spheres or Type 2 hollow spherical glass particles according to the present invention - are added to the mixed cement slurry and gently homogenized with a spatula.

The density of the cement slurry containing (any type of) the hollow spheres is usually measured with a pressurized mud balance. Then the slurry is put into an autoclave and nitrogen pressure is applied for 5 min. After decompression of the autoclave the density of the cement slurry is measured again. The density stays unchanged in case the hollow spheres withstand the pressure. The density increases in case the hollow spheres are crushed by the pressure.

In this example several pressures have been applied on samples of the cement slurry comprising either the industry standard spheres or the Type 2 hollow spherical glass particles according to the present invention and prepared as described above. The tests with each pressure were performed individually. Applied pressures were 5000 psi, 6000 psi, 10 000 psi, 12 000 psi and 16 000 psi.

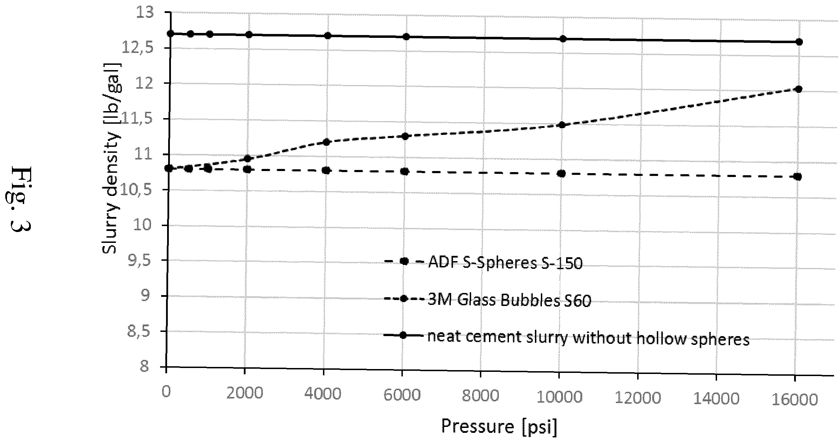

Figure 3 shows the results of these tests. The cement slurry containing the Type 2 hollow spherical glass particles according to the present invention withstand a pressure of 16 000 psi without density increase (ADF S-Spheres S-150, dashed line in Figure 3). Industry standard spheres (S 60, borosilicate glass, 3M) were tested in comparison. The density of the cement slurry containing the industry standard spheres continuously increased with every tested pressure. At 16 000 psi the density of the cement slurry containing the industry standard spheres increased for about 11% (3M Glass Bubbles S60, dotted line in Figure 3). The density of the neat cement slurry without any hollow spheres does not change with the pressure and is shown in Figure 3 as a comparison (solid line in Figure 3).

Example 3: rheology of cement slurries containing hollow spheres

The same samples as in the Example 3 were prepared for compressive strength tests. Then the rheology is measured according to API RP 13B.

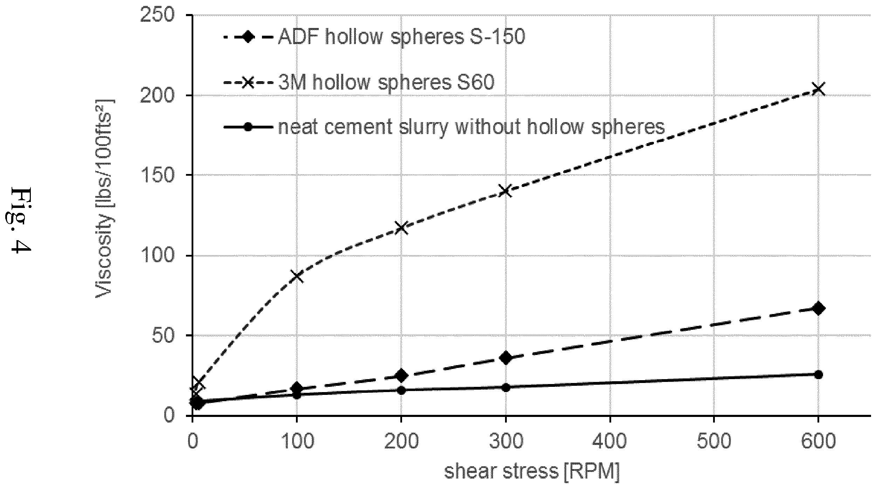

Figure 4 shows that Type 2 hollow spherical glass particles according to the present invention only moderately increase the viscosity of the neat cement slurry without any hollow spheres (ADF hollow spheres S-150, dashed line in Figure 4), whereas the industry standard spheres (3M hollow spheres S60, dotted line in Figure 4) strongly increase the cement slurry viscosity. High viscous cement slurries require additional additives like dispersants to adjust their pumping properties.

Example 4: Physical properties

Comparison of the Type 2 hollow spherical glass particles according to the present invention with industry standard spheres (S 60, borosilicate glass, 3M).

The Type 2 hollow spherical glass particles according to the present invention and industry standard spheres have approximately the same specific density of about 0.6 g/cm$^3$. This is why for a defined density reduction of a cement slurry approximately the same amount of hollow spheres is required.

However, bulk density strongly differs. The Type 2 hollow spherical glass particles according to the present invention have bulk density is 0,48 g/cm$^3$ while the industry standard spheres (S 60, borosilicate glass, 3M) have bulk density is 0,30 g/cm$^3$. Low bulk density is a disadvantage due to the large space needed for storage e.g. on an oil platform offshore.

The Type 2 hollow spherical glass particles according to the present invention also show excellent flow properties as a powder without any dust formation. The industry standard spheres (S 60, borosilicate glass, 3M) form aggregates which makes the powder dump like flour and creates heavy dust.

The Type 2 hollow spherical glass particles according to the present invention exhibit a compressive strength of more than 16 000 psi in a cement slurry with only a shell thickness of about 8 micron and a particle diameter of 150 micron. The industry standard spheres (S 60, borosilicate glass, 3M) with a compressive strength of about 10 000 psi have a shell thickness of about 3 micron and a diameter of about 30 micron.

Example 5: Further examples and comparisons

Cement and slurry properties were tested on samples of a standard cement slurry (API Class G Cement) and different slurry mixtures including light-weight additives. The cement slurries including additives were mixed to have a common density. All samples were prepared in the laboratory of the chair of Drilling & Completion Engineering at the Montan Universität in Leoben, Austria and tested for their rheology according to industry standards.

5.1: Cement Slurry Compositions

Four different cement slurries were mixed according to the compositions listed in Table 1 by following API RP 10B-2.

| Table 1 - Cement Slurry Compositions | | |
|---|---|---|
| Sample Type | Water-Cement Ratio %bwoc | Additive-Cement Ratio %bwoc |
| A - Class G Cement only | 3.0 | - |
| B - Class G Cement and Type 2 hollow spherical glass particles | 0.44 | 0.160 |
| C - Class G Cement and Cenospheres | 0.44 | 0.175 |
| D - Class G Cement and Industry standard spheres (S 60, borosilicate glass, 3M) | 0.44 | 0.130 |

Six different batches of each sample type (A, B, C, D) were prepared and tested further. A1 - A6 correspond to batches of type A, B1 - B6 correspond to batches of type B, C1 - C6 correspond to batches of type C and D1 - D6 correspond to batches of type D (cf. Table 3).

5.2: Cement Slurry Densities and Temperatures

Two batches of each cement slurry type were prepared and measured with a pressurized ("Tru-Wate") mud balance according to API RP 10B-2. Moreover, Table 3 also lists the temperatures of the cement slurries during the density measurements.

| Table 2 - Cement slurry and temperatures | | | | |
|---|---|---|---|---|
| Sample Type | Density[1] kg/l | Slurry Temperature[1] °C | Density[2] kg/l | Slurry Temperature[1] °C |
| A | 1.86 | 24.3 | 1.85 | 24.7 |
| B | 1.55 | 23.8 | 1.56 | 21.7 |
| C | 1.55 | 22.2 | 1.55 | 22.1 |

(continued)

| Table 2 - Cement slurry and temperatures | | | | |
|---|---|---|---|---|
| Sample Type | Density[1] kg/l | Slurry Temperature[1] °C | Density[2] kg/l | Slurry Temperature[1] °C |
| D | 1.56 | 22.4 | 1.55 | 22.4 |

[1]Measured properties for samples A1-A3, B1-B3, C1-C3, D1-D3.
[2]Measured properties for samples A4-A6, B4-B6, C4-C6, D4-D6.

5.3: Cement Slurry Rheology

Cement slurry rheologies were measured using a multi-speed Chandler viscometer Model 3500 following API RP 10B-2. Table 4 lists dial readings for each rotational speed setting, sample type, and batch. The apparent Newtonian viscosity, $\mu_a$, can be calculated in centipoise from the readings and rotor speeds by

$$\mu_a = 300 \, \theta_N / N$$

where $\theta_N$ is the dial reading in degrees and $N$ is the rotor speed in revolutions per minute.

| Table 3 - Milti-speed viscometer dial readings | | | | | | | | | | | | |
|---|---|---|---|---|---|---|---|---|---|---|---|---|
| Samples | Dial Readings $\theta_N$ in ° at rotor speed $N$ in rpm | | | | | | | | | | | |
| | 1 | 2 | 3 | 6 | 10 | 20 | 30 | 60 | 100 | 200 | 300 | 600 |
| A1 - A3 | 6 | 8 | 10 | 17 | 23 | 27 | 32 | 40 | 46 | 59 | 70 | 136 |
| A4 - A6 | 5 | 7 | 11 | 17 | 15 | 35 | 40 | 49 | 61 | 76 | 83 | 105 |
| B1 - B3 | 9 | 13 | 15 | 25 | 34 | 51 | 60 | 77 | 96 | 129 | 160 | 249 |
| B4 - B6 | 6 | 13 | 17 | 25 | 35 | 49 | 57 | 75 | 93 | 135 | 165 | 262 |
| C1 - C3 | 10 | 14 | 15 | 20 | 31 | 48 | 61 | 100 | 131 | 186 | 244 | _[3] |
| C4 - C6 | 7 | 11 | 14 | 26 | 33 | 49 | 60 | 87 | 111 | 167 | 220 | _[3] |
| D1 - D3 | 10 | 12 | 14 | 16 | 53 | 64 | 80 | 113 | 127 | 175 | 230 | _[3] |
| D4 - D6 | 9 | 15 | 20 | 32 | 44 | 64 | 85 | 128 | 178 | 232 | _[3] | _[3] |
| [3] Measurement out of range of the viscometer | | | | | | | | | | | | |

**Claims**

1. A hollow spherical glass particle, comprising:

   aluminum oxide $Al_2O_3$, silicon dioxide $SiO_2$ and at least one metal oxide, wherein the metal oxide is selected from the group consisting of alkali metal oxides;
   wherein the hollow spherical glass particle comprises between 32 wt. % and 40 wt. % of $Al_2O_3$, between 38 wt. % and 46 wt. % of $SiO_2$, and between 18 wt. % and 26 wt. % of at least one alkali metal oxide selected from sodium oxide and/or potassium oxide;
   wherein the hollow spherical glass particle has a particle diameter of between 100 and 400 microns;
   with the proviso that the hollow spherical glass particle is free of boron.

2. The hollow spherical glass particle of claim 1, wherein the hollow spherical glass particle comprises 36 wt. % of $Al_2O_3$, 42 wt. % of $SiO_2$, and 22 wt. % of at least one alkali metal oxide.

3. The hollow spherical glass particle of claim 1, wherein the hollow spherical glass particle comprises between 18 wt. % and 26 wt. %, preferably 22 wt. %, of a mixture of $K_2O$ and $Na_2O$.

4. The hollow spherical glass particle of any one of claims 1 to 3, wherein the hollow spherical glass particle has an 80% crush strength of at least 10000 psi (68.9 MPa), more preferably at least 12500 psi (86.2 MPa), especially at least 15000 psi (103.4 MPa).

5. The hollow spherical glass particle of any one of claims 1 to 4, wherein the hollow spherical glass particle has a melting temperature of at least 1200°C.

6. A plurality of hollow spherical glass particles of any one of claims 1 to 5.

7. The plurality of hollow spherical glass particles of claim 6, wherein the hollow spherical glass particles have a true density of between 0.4 g/cm$^3$ and 0.8 g/cm$^3$ preferably between 0.45 g/cm$^3$ and 0.75 g/cm$^3$, more preferably between 0.5 g/cm$^3$ and 0.6 g/cm$^3$.

8. A filler comprising a plurality of hollow spherical glass particles of any one of claims 1 to 5.

9. A method for producing hollow spherical glass particles comprising the following steps:

   Step 1: Mixing ingredients containing one or more of the following chemical compounds:
   china clay, feldspar, potassium carbonate, zeolites, aluminium hydroxide, potassium or sodium silicate, and porcelain, such that the resulting mixture comprises between 32 wt. % and 40 wt. % of $Al_2O_3$, between 38 wt. % and 46 wt. % of $SiO_2$, and between 18 wt. % and 26 wt. % of at least one alkali metal oxide selected from sodium oxide and/or potassium oxide and keeping the mixture from other chemical compounds, such that the total amount of the other chemical compounds does not exceed 3-4 wt. %;
   Step 2: Mixing and blending the mixture with water, in order to achieve enough flowability mixture;
   Step 3: Spray drying the enough flowability mixture at a standard drying temperature, in order to achieve a dried mixture comprising particles having an average size of 80-400 microns and moisture of at least 1% and at most 10%;
   Step 4: Uniformly feeding the dried mixture into a heating device, such that the dried mixture falls through the heating device for at least about 1 second and at most 10 seconds (in a free fall), while the temperature in the heating device is maintained between 1500° C and 1800° C, in order to achieve hollow spherical glass particles.

10. The method of claim 9, wherein milling the mixture (e.g. in a ball mill), in order to achieve a milled powder, such that an average size of particles in the milled powder is of at most about 5 microns, is performed after Step 2 and before Step 3.

11. The method of claim 9 or 10, wherein the resulting mixture comprises between 18 wt. % and 26 wt. %, preferably 22 wt. %, of a mixture of $K_2O$ and $Na_2O$.

12. A formulation comprising an organic binder and the filler of claim 8.

13. A formulation comprising an inorganic binder and the filler of claim 8.

14. The formulation of claim 12, comprising from 10 to 150 wt.-%, preferably 20 to 80 wt. %, of the filler of claim 8, based on the dry weight of the inorganic binder.

15. Use of the filler of claim 8 in acoustic applications, heat insulation applications, self-levelling masses, repair mortars, lightweight concrete, freeze-thaw resistant concrete, insulating coatings and/or sound and vibration dampers.


**Patentansprüche**

1. Hohles kugelförmiges Glaspartikel, umfassend:

   Aluminiumoxid $Al_2O_3$, Siliciumdioxid SiO2 und mindestens ein Metalloxid, wobei das Metalloxid aus der Gruppe ausgewählt wird bestehend aus Alkalimetalloxiden;
   wobei das hohle kugelförmige Glaspartikel zwischen 32 Gew.-% und 40 Gew.-% $Al_2O_3$, zwischen 38 Gew.-% und 46 Gew.-% SiO2 und zwischen 18 Gew.-% und 26 Gew.-% mindestens eines Alkalimetalloxids ausgewählt unter Natriumoxid und/oder Kaliumoxid umfasst;
   wobei das hohle kugelförmige Glaspartikel einen Partikeldurchmesser zwischen 100 und 400 Mikron aufweist;
   mit der Maßgabe, dass das hohle kugelförmige Glaspartikel frei von Bor ist.

2. Hohles kugelförmiges Glaspartikel nach Anspruch 1, wobei das hohle kugelförmige Glaspartikel 36 Gew.-% Al$_2$O$_3$, 42 Gew.-% SiO2 und 22 Gew.-% mindestens eines Alkalimetalloxids umfasst.

3. Hohles kugelförmiges Glaspartikel nach Anspruch 1, wobei das hohle kugelförmige Glaspartikel zwischen 18 Gew.-% und 26 Gew.-%, bevorzugt 22 Gew.-% einer Mischung von K2O und Na2O umfasst.

4. Hohles kugelförmiges Glaspartikel nach einem der Ansprüche 1 bis 3, wobei das hohle kugelförmige Glaspartikel eine 80 %-ige Zerstoßfestigkeit von mindestens 10000 psi (68,9 MPa), noch bevorzugter mindestens 12500 psi (86,2 MPa), insbesondere mindestens 15000 psi (103,4 MPa) aufweist.

5. Hohles kugelförmiges Glaspartikel nach einem der Ansprüche 1 bis 4, wobei das hohle kugelförmige Glaspartikel eine Schmelztemperatur von mindestens 1200 °C aufweist.

6. Mehrzahl hohler kugelförmiger Glaspartikel nach einem der Ansprüche 1 bis 5.

7. Mehrzahl hohler kugelförmiger Glaspartikel nach Anspruch 6, wobei die hohlen kugelförmigen Glaspartikel eine absolute Dichte zwischen 0,4 g/cm3 und 0,8 g/cm3, bevorzugt zwischen 0,45 g/cm3 und 0,75 g/cm3, noch bevorzugter zwischen 0,5 g/cm3 und 0,6 g/cm3 aufweisen.

8. Füllstoff umfassend eine Mehrzahl hohler kugelförmiger Glaspartikel nach einem der Ansprüche 1 bis 5.

9. Verfahren für die Herstellung hohler kugelförmiger Glaspartikel, umfassend die folgenden Schritte:

Schritt 1: Mischen von Bestandteilen, die eine oder mehrere der folgenden chemischen Verbindungen enthalten: Porzellanerde, Feldspat, Kaliumcarbonat, Zeolithen, Aluminiumhydroxid, Kalium- oder Natriumsilicat und Porzellan, derart, dass die resultierende Mischung zwischen 32 Gew.-% und 40 Gew.-% Al$_2$O$_3$, zwischen 38 Gew.-% und 46 Gew.-% SiO2 und zwischen 18 Gew.-% und 26 Gew.-% mindestens eines Alkalimetalloxids ausgewählt unter Natriumoxid und/oder Kaliumoxid umfasst, und Fernhalten der Mischung von anderen chemischen Verbindungen, derart, dass die Gesamtmenge der anderen chemischen Verbindungen 3-4 Gew.-% nicht übersteigt;
Schritt 2: Mischen und Abmischen der Mischung mit Wasser, um ausreichende Fließfähigkeit der Mischung zu erreichen;
Schritt 3: Sprühtrocknen der Mischung ausreichender Fließfähigkeit bei einer normalen Trocknungstemperatur, um eine getrocknete Mischung zu erreichen, die Partikel umfasst, die eine durchschnittliche Größe von 80-400 Mikron und eine Feuchtigkeit von mindestens 1 % und höchstens 10 % aufweisen;
Schritt 4: Gleichförmiges Eingeben der getrockneten Mischung in eine Erhitzungsvorrichtung, derart, dass die getrocknete Mischung durch die Erhitzungsvorrichtung mindestens etwa 1 Sekunde und höchstens 10 Sekunden lang (in Freifall) fällt, während die Temperatur in der Erhitzungsvorrichtung zwischen 1500 °C und 1800 °C aufrechterhalten wird, um hohle kugelförmige Glaspartikel zu erreichen.

10. Verfahren nach Anspruch 9, wobei Mahlen der Mischung (z. B. in einer Kugelmühle), um ein gemahlenes Pulver zu erreichen, derart, dass eine durchschnittliche Größe von Partikeln in dem gemahlenen Pulver höchstens etwa 5 Mikron beträgt, nach Schritt 2 und vor Schritt 3 ausgeführt wird.

11. Verfahren nach Anspruch 9 oder 10, wobei die resultierende Mischung zwischen 18 Gew.-% und 26 Gew.-%, bevorzugt 22 Gew.-% einer Mischung von K2O und Na2O umfasst.

12. Formulierung umfassend ein organisches Bindemittel und den Füllstoff nach Anspruch 8.

13. Formulierung umfassend ein anorganisches Bindemittel und einen Füllstoff nach Anspruch 8.

14. Formulierung nach Anspruch 12, umfassend 10 bis 150 Gew.-% , bevorzugt 20 bis 80 Gew.-% des Füllstoffs nach Anspruch 8, auf das Trockengewicht des anorganischen Bindemittels bezogen.

15. Verwendung des Füllstoffs nach Anspruch 8 bei akustischen Anwendungen, Wärmeisolierungsanwendungen, selbstverlaufenden Massen, Repariermörteln, Leichtbeton, gefrierauftau-resistentem Beton, Isolierbeschichtungen und/oder Schall- und Vibrationsdämpfern.

**Revendications**

1. Particule de verre sphérique creuse, comprenant :

   de l'oxyde d'aluminium $Al_2O_3$, du dioxyde de silicium $SiO_2$ et au moins un oxyde métallique, l'oxyde métallique étant choisi dans le groupe constitué par les oxydes de métaux ;
   dans laquelle la particule de verre sphérique creuse comprend entre 32 % en poids et 40 % en poids d'$Al_2O_3$, entre 38 % en poids et 46 % en poids de $SiO_2$, et entre 18 % en poids et 26 % en poids d'au moins un oxyde de métal alcalin choisi parmi l'oxyde de sodium et/ou l'oxyde de potassium ;
   dans laquelle la particule de verre sphérique creuse a un diamètre de particule compris entre 100 et 400 micromètres ;
   à condition que la particule de verre sphérique creuse soit exempte de bore.

2. Particule de verre sphérique creuse selon la revendication 1, dans laquelle la particule de verre sphérique creuse comprend 36 % en poids d'$Al_2O_3$, 42 % en poids de $SiO_2$, et 22 % en poids d'au moins un oxyde de métal alcalin.

3. Particule de verre sphérique creuse selon la revendication 1, dans laquelle la particule de verre sphérique creuse comprend entre 18 % en poids et 26 % en poids, de préférence 22 % en poids, d'un mélange de $K_2O$ et de $Na_2O$.

4. Particule de verre sphérique creuse selon l'une quelconque des revendications 1 à 3, dans laquelle la particule de verre sphérique creuse a une résistance à l'écrasement à 80 % d'au moins 10 000 psi (68.9 MPa), plus préférablement d'au moins 12 500 psi (86.2 MPa), en particulier d'au moins 15 000 psi (103.4 MPa).

5. Particule de verre sphérique creuse selon l'une quelconque des revendications 1 à 4, dans laquelle la particule de verre sphérique creuse a une température de fusion d'au moins 1200 °C.

6. Pluralité de particules de verre sphériques creuses selon l'une quelconque des revendications 1 à 5.

7. Pluralité de particules de verre sphériques creuses selon la revendication 6, dans laquelle les particules de verre sphériques creuses ont une masse volumique réelle comprise entre 0,4 g/cm$^3$ et 0,8 g/cm$^3$, plus préférablement entre 0,45 g/cm$^3$ et 0,75 g/cm$^3$, plus préférablement entre 0,5 g/cm$^3$ et 0,6 g/cm$^3$.

8. Charge comprenant une pluralité de particules de verre sphériques creuses selon l'une quelconque des revendications 1 à 5.

9. Procédé de production de particules de verre sphériques creuses comprenant les étapes suivantes :

   étape 1 : mélanger les ingrédients contenant un ou plusieurs des composés chimiques suivants :
   kaolin, feldspath, carbonate de potassium, zéolites, hydroxyde d'aluminium, silicate de potassium ou de sodium et porcelaine, de telle sorte que le mélange résultant comprend entre 32 % en poids et 40 % en poids d'$Al_2O_3$, entre 38 % en poids et 46 % en poids de $SiO_2$, et entre 18 % en poids et 26 % en poids d'au moins un oxyde de métal alcalin choisi parmi l'oxyde de sodium et/ou l'oxyde de potassium et garder le mélange à l'écart des autres composés chimiques, de telle sorte que la quantité totale des autres composés chimiques ne dépasse pas 3 à 4 % en poids ;
   étape 2 : mélanger et homogénéiser le mélange avec de l'eau, afin d'obtenir un mélange suffisamment fluide ;
   étape 3 : sécher par pulvérisation le mélange suffisamment fluide à une température de séchage standard, afin d'obtenir un mélange séché comprenant des particules ayant une taille moyenne de 80 à 400 micromètres et une humidité d'au moins 1 % et d'au plus 10 % ;
   étape 4 : alimenter de manière uniforme le mélange séché dans un dispositif de chauffage, de telle sorte que le mélange séché passe à travers le dispositif de chauffage pendant au moins environ 1 seconde et au plus environ 10 secondes (en chute libre), tandis que la température dans le dispositif de chauffage est maintenue entre 1500 °C et 1800 °C, afin d'obtenir des particules de verre sphériques creuses.

10. Procédé selon la revendication 9, dans lequel le broyage du mélange (par ex. dans un broyeur à boulets), afin d'obtenir une poudre broyée, de telle sorte qu'une taille moyenne de particules dans la poudre broyée soit d'au plus environ 5 micromètres, est effectué après l'étape 2 et avant l'étape 3.

11. Procédé selon la revendication 9 ou 10, dans lequel le mélange résultant comprend entre 18 % en poids et 26 % en poids, de préférence 22 % en poids, d'un mélange de K$_2$O et de Na$_2$O.

12. Formulation comprenant un liant organique et la charge selon la revendication 8.

13. Formulation comprenant un liant inorganique et la charge selon la revendication 8.

14. Formulation selon la revendication 12, comprenant de 10 à 150 % en poids, de préférence de 20 à 80 % en poids, de la charge selon la revendication 8, sur la base du poids sec du liant inorganique.

15. Utilisation de la charge selon la revendication 8 dans des applications acoustiques, des applications d'isolation thermique, des masses autonivelantes, des mortiers de réparation, un béton léger, un béton résistant au gel-dégel, des revêtements isolants et/ou des amortisseurs de bruit et de vibrations.

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7666505 B2
- US 858571
- US 20010043996 A1
- US 440249
- US 20150315075 A1
- US 9096034 B2
- US 8815408 B1

### Non-patent literature cited in the description

- **V.V. BUDOV**. Hollow glass microspheres. Use, properties, and technology (Review). *Science In Glass Production, Glass and Ceramics*, July 1994, vol. 51 (7), 230-235
- **R.R. LUKMANOV et al.** Method of Predicting Changes in Properties and Prevention of Complications during Well Cementing Using Cement Slurries with Microspheres. *Scientific-Technical Journal*, 2005, vol. N8, 38-42